# EUROPÄISCHE PATENTSCHRIFT

(11) **EP 0 896 160 B1**
(45) Veröffentlichungstag und Bekanntmachung des Hinweises auf die Patenterteilung: **14.08.2002**
(21) Anmeldenummer: 98110297.3
(22) Anmeldetag: 05.06.1998
(51) Int. Cl.: C04B 40/06, F16B 13/14, E21D 20/02

(54) **Aushärtbare Mörtelmasse**
Curable mortar mass
Masse de mortier durcible

(30) Priorität: 08.08.1997 DE 19734302
(43) Veröffentlichungstag der Anmeldung: 10.02.1999
(73) Patentinhaber: fischerwerke Artur Fischer GmbH & Co. KG, 72178 Waldachtal (DE)
(72) Erfinder: Arnold, Norbert, Dr. Dipl.-Ing., 72178 Waldachtal (DE); Haug, Willi, 72250 Freudenstadt-Musbach (DE)

(56) Entgegenhaltungen:
- DE-A- 4 432 879
- DE-A- 19 608 807
- GB-A- 1 599 916
- US-A- 4 126 009

## Beschreibung

Die Erfindung betrifft eine aushärtbare Mörtelmasse aus einer Bindemittel-Komponente und einer wässrigen Komponente, die getrennt voneinander beispielsweise in einer Patrone oder einer Kartusche aufbewahrt werden.

Bei der Patrone handelt es sich üblicherweise um ein zerstörbares Behältnis, das eine der beiden Komponenten der Mörtelmasse und einen oder mehrere Innenbehälter enthält, in denen sich die andere Komponente der Mörtelmasse befindet. Die Patrone wird beispielsweise in ein Bohrloch eingeführt, mittels eines in dem Bohrloch zu verankernden Ankers zerstört und die beiden Komponenten durch Drehen des Ankers miteinander vermischt. Die aushärtbare Mörtelmasse kann auch in einer Kartusche eingefüllt sein, die mindestens zwei Kammern aufweist, um die Komponenten der Mörtelmasse voneinander getrennt zu halten. Die Querschnitte der Kammern entsprechen dabei dem zur Aushärtung erforderlichen Mischungsverhältnis. Über eine Mischdüse werden die Komponenten beim Auspressen aus der Kartusche miteinander vermischt.

Eine Mörtelmasse der eingangs genannten Art ist aus der P 44 32 879 bekannt. Als Bindemittel-Komponente weist die bekannte Mörtelmasse mineralischen Mörtel, der mit Wasser aushärtet, und ein gegenüber dem mineralischen Mörtel inertes, unpolares Lösungsmittel als Anteigmittel auf. Durch das Vermischen des Mörtels mit dem Lösungsmittel zu einer Mörtel-Komponente wird der Mörtel angeteigt, d. h. seine Schüttdichte wird auf das drei- bis vierfache erhöht. Dadurch kann eine wesentlich größere Menge Mörtel in einem vorgegebenen Volumen untergebracht werden. Ferner werden die Dichten der beiden Komponenten der Mörtelmasse einander angeglichen und das Fließverhalten des Mörtels verbessert. Eine Pfropfenbildung beim Mischen der Mörtelmasse in der Mischdüse einer Zweikammer-Kartusche wird vermieden. Die zweite Komponente der bekannten Mörtelmasse ist Wasser oder eine überwiegend Wasser enthaltende Zubereitung.

Zum Verarbeiten der Mörtelmasse werden deren Komponenten miteinander gemischt, wobei das Wasser aufgrund der stark unterschiedlichen Polaritäten des polaren Mörtels und des unpolaren Anteigmittels das Anteigmittel aus dem Mörtel verdrängt. Der Mörtel bindet hydraulisch ab und das Anteigmittel tritt aus der angemischten Mörtelmasse aus. Dies hat zur Folge, daß das Anteigmittel aus einem Bohrloch oder dgl., in das die angemischte Mörtelmasse eingebracht ist, austritt und beispielsweise an einer Wand herabläuft oder von einer Decke heruntertropft. Das bringt zumindest den Nachteil eines optisch negativen Eindrucks mit sich. Darüber hinaus kann das austretende Anteigmittel bei einem Verwender den Eindruck erwecken, die Mörtelmasse sei nicht richtig angemischt und binde nicht richtig ab. Beispielsweise an einer Wand herablaufendes Anteigmittel ist nicht akzeptabel, wenn deren Oberfläche bereits ihren Endzustand erhalten hat. Des weiteren kann das Anteigmittel die Oberfläche, mit der es in Berührung kommt, chemisch verändern, insbesondere unerwünscht verfärben.

Zur Vermeidung dieses Nachteiles wurde daher in der Patentanmeldung 196 08 807.0 vorgeschlagen, der wässrigen Komponente ein hydrophobes Ad- oder Absorbtionsmittel, beispielsweise auf silikatischer Basis, beizufügen. Beim Mischen bindet das hydrophobe Ad- oder Absorbtionsmittel das aus der Bindemittel-Komponente verdrängte unpolare Anteigmittel. Das hydrophobe Ad- oder Absorbtionsmittel mit dem gebundenen Anteigmittel verbleibt fein verteilt als inerter Zuschlagstoff in der hydraulisch abbindenden Mörtelmasse, ohne die Festigkeit der ausgehärteten Mörtelmasse bedeutend zu beeinflussen. Damit wird erreicht, daß das Anteigmittel in der angemischten Mörtelmasse verbleibt, ohne deren Eigenschaften zu verschlechtern.

Nachteilig bei der vorgeschlagenen Lösung ist jedoch, daß zwischen dem hydraulischen Bindemittel und dem als Anteigmittel dienenden flüssigen Lösungsmittel nach einer gewissen Zeit eine Sedimentation stattfindet, die den Aushärteprozeß bei Verwendung der Mörtelmasse erheblich beeinträchtigt. Daraus ergibt sich nur eine geringe Dauerfestigkeit der Bindemittel-Komponente, die zu Fehlmontagen führen kann.

Der Erfindung liegt daher die Aufgabe zugrunde, eine Mörtelmasse der eingangs genannten Art so zu verbessern, daß das Anteigmittel nicht aus der angemischten Mörtelmasse austritt und die Bindemittel-Komponente dauerhaft haltbar ist.

Diese Aufgabe wird erfindungsgemäß mit den Merkmalen des Anspruchs 1 gelöst. Das als Anteigmittel verwendete inerte unpolare Lösungsmittel ist vorzugsweise ein Öl oder eine Mischung aus verschiedenen Ölen, in dem ein fein verteiltes thermoplastisches Polymer enthalten ist. Bei dem Polymer handelt es sich insbesondere um ein Polyolefin oder Mischungen aus Polyolefinen mit anderen Thermoplasten. Die Öl/Thermoplast-Mischung ist gegenüber dem hydraulischen Bindemittel inert, so daß keine Beeinflussung des Aushärteprozesses nach der Vermengung mit der wässrigen Komponente eintritt. Der Anteil des thermoplastischen Polymers in dem Öl ist derart gewählt, daß die Viskosität etwa der Viskosität der wässrigen, vorzugsweise mit einem Thixotropiermittel eingedickten Komponente entspricht. Durch die hohe Viskosität des Anteigmittels findet keine Sedimentation in der Patrone bzw. Kartusche statt, so daß die Bindemittel-Komponente und damit das Gesamtsystem dauerhaft haltbar ist. Da des weiteren die Bindemittel-Komponente mit dem pastös eingestellten Lösungsmittel eine homogene Mischung ergibt, kann auch der Anteil des Lösungsmittels reduziert werden. Des weiteren können bei der erfindungsgemäßen Mörtelmasse die rheologischen Eigenschaften der beiden Komponenten besser aufeinander abgestimmt werden, so daß sich insbesondere bei der Verwendung der Mörtelmasse in einem Kartuschensystem bessere Auspreß- und Fließeigenschaften in Verbindung mit einem Statikmischer ergeben.

Als besonders geeignetes Anteigmittel hat sich Paraffinöl erwiesen, wobei der Anteil des Öls gegenüber dem hydraulischen Bindemittel, vorzugsweise Zement, 8 - 22 Gew.-% beträgt. Bei dem Paraffinöl handelt es sich um ein unpolares Lösungsmittel, das beim Mischvorgang spontan aus der Bindemittel-Komponente verdrängt wird. Damit läuft der Aushärtevorgang der Mörtelmasse unbeeinflußt von dem Anteigmittel ab, so daß kein bedeutender Festigkeitsverlust nach Abschluß des Aushärtevorganges auftritt. Der Anteil des fein verteilten thermoplastischen Polymers im Öl zur Erhöhung dessen Viskosität kann 1 - 30 Gew.-%, vorzugsweise 2,5 - 25 Gew.-% bezogen auf den Ölanteil betragen.

In weiterer Ausgestaltung der Erfindung kann der Bindemittel-Komponente als Additiv ein Detergens zugesetzt sein. Dadurch wird die Oberflächenspannung zwischen dem Bindemittel und dem Öl herabgesetzt, so daß sich eine weitere Verbesserung der Vermischung der Komponenten ergibt. Ferner läßt sich durch den Zusatz an Detergens der Ölbedarf reduzieren, ohne daß die Homogenität und Fließfähigkeit der Mischung beeinträchtigt wird. Der Anteil des Detergens im Öl beträgt vorzugsweise zwischen 2,5 - 14 Gew.-% bezogen auf den Ölanteil.

Die wässrige Komponente kann ein Verdickungsmittel, z. B. Polyacryl, Polyvinylalkohol, modifizierte Cellulose oder Kieselsäure aufweisen. Dadurch wird, insbesondere wenn die Mörtelmasse in einer Patrone enthalten ist, vermieden, daß die wässrige Komponente nach dem Zerstören der Patrone abfließt. Durch die beim Mischen der beiden Komponenten der Mörtelmasse auftretenden Scherkräften verringert sich die Viskosität der wässrigen Komponente, so daß sich die beiden Komponenten gut vermischen lassen, um ein vollständiges Abbinden der Mörtelmasse und damit eine hohe Festigkeit der ausgehärteten Mörtelmasse sicherzustellen.

Eine weitere Verbesserung des Mischverhaltens der Komponenten, insbesondere im Statikmischer, wird dadurch erreicht, daß der wässrigen Komponente als inerter Zuschlag kantengerundeter und hydrophobierter Quarzsand beigefügt wird.

Rezepturbeispiele erfindungsgemäßer Mörtelmassen:
1. Bindemittel-Komponente:

| | |
|---|---|
| 250 g | Zement |
| 38 g | Paraffinöl |
| 4 g | Detergens |
| 11 g | modifiziertes Polyethylen |

Wässrige Komponente:

| | |
|---|---|
| 170 g | eingedicktes Wasser |
| 250 g | Quarzsand |
| 3 g | hydrophobe, pyrogene Kieselsäure |
| 17 g | Natriumaluminiumsilicat, modifiziert |

2. Bindemittel-Komponente:
Wie 1.
Wässrige Komponente:

| | |
|---|---|
| 150 g | eingedicktes Wasser |
| 270 g | Quarzsand |
| 5 g | Hohlglaskugeln |
| 2,5 g | hydrophobe, pyrogene Kieselsäure |
| 1 g | Zinkstearat |

3. Bindemittel-Komponente:

| | |
|---|---|
| 1 g | pyrogene Kieselsäure |
| 250 g | Zement |
| 42 g | Paraffinöl |
| 3 g | Detergens |
| 2 g | Polypropylen |

Wässrige Komponente:
Wie 2.

## Patentansprüche

1. Aushärtbare Mörtelmasse, enthaltend
- eine Bindemittel-Komponente, die
- ein hydraulisches Bindemittel und
- als Anteigmittel ein inertes unpolares Lösungsmittel mit fein verteiltem thermoplastischen Polymer aufweist und
- eine davon getrennt aufbewahrte wässrige Komponente, die
- Wasser und
- ein hydrophobes Ad- oder Absorbtionsmittel aufweist.

2. Mörtelmasse nach Anspruch 1, **dadurch gekennzeichnet, daß** das unpolare Lösungsmittel Paraffinöl und das thermoplastische Polymer ein Polyolefin oder eine Mischung aus Polyolefinen mit anderen Thermoplasten ist.

3. Mörtelmasse nach Anspruch 2, **dadurch gekennzeichnet, daß** der Anteil des Öls 8 - 22 Gew.-% des hydraulischen Bindemittels und der Anteil des thermoplastischen Polymers 1 - 30 Gew.-% des Ölanteils beträgt.

4. Mörtelmasse nach Anspruch 1, **dadurch gekennzeichnet, daß** die Bindemittel-Komponente als Additiv ein Detergens aufweist.

5. Mörtelmasse nach Anspruch 4, **dadurch gekennzeichnet, daß** der Anteil des Detergens 2,5 -14 Gew.-% des Ölanteils beträgt.

6. Mörtelmasse nach Anspruch 1, **dadurch gekennzeichnet, daß** die wässrige Komponente mit einem Thixotropiermittel derart eingestellt ist, daß sie sich ohne Einwirkung von Scherkräften pastös verhält.

7. Mörtelmasse nach Anspruch 6, **dadurch gekennzeichnet, daß** das Thixotropiermittel Polyacryl, Polyvinylalkohol, modifizierte Cellulose oder Kieselsäure ist.

8. Mörtelmasse nach Anspruch 1, **dadurch gekennzeichnet, daß** das hydraulische Bindemittel Zement, Gips oder gebrannter Kalk ist.

9. Mörtelmasse nach Anspruch 1, **dadurch gekennzeichnet, daß** das hydrophobe Ad- oder Absorptionsmittel hydrophobierte Kieselsäure, Aktivkohle oder hydrophober Zeolith ist.

10. Mörtelmasse nach Anspruch 1, **dadurch gekennzeichnet, daß** die wässrige Komponente Hohlglaskugeln mit einem Anteil von 2 - 8 Gew.-% vom Anteil des eingedickten Wassers aufweist.

11. Mörtelmasse nach Anspruch 1, **dadurch gekennzeichnet, daß** die wässrige Komponente Zinkstearat mit einem Gew.-%-Anteil von 0,5 - 1,5 bezogen auf den Gew.-Anteil des eingedickten Wassers aufweist.

12. Mörtelmasse nach Anspruch 1, **dadurch gekennzeichnet, daß** die wässrige Komponente als Zuschlag kantengerundeten und hydrophobierten Quarzsand aufweist.

## Claims

1. Curable mortar composition comprising
- a binder component comprising
- a hydraulic binder and,
- as pasting agent, an inert non-polar solvent containing finely dispersed thermoplastic polymer and
- an aqueous component, accommodated separately therefrom, comprising
- water and
- a hydrophobic ad- or ab-sorbent.

2. Mortar composition according to claim 1, **characterised in that** the non-polar solvent is paraffin oil and the thermoplastic polymer is a polyolefin or a mixture of polyolefins with other thermoplastics.

3. Mortar composition according to claim 2, **characterised in that** the amount of the oil is from 8 to 22 % by weight of the hydraulic binder and the amount of the thermoplastic polymer is from 1 to 30 % by weight of the amount of the oil.

4. Mortar composition according to claim 1, **characterised in that** the binder component comprises a detergent as additive.

5. Mortar composition according to claim 4, **characterised in that** the amount of the detergent is from 2.5 to 14 % by weight of the amount of the oil.

6. Mortar composition according to claim 1, **characterised in that** the aqueous component is so adjusted with a thixotropic agent that it behaves like a paste without the application of shear forces.

7. Mortar composition according to claim 6, **characterised in that** the thixotropic agent is polyacrylic, polyvinyl alcohol, modified cellulose or silicic acid.

8. Mortar composition according to claim 1, **characterised in that** the hydraulic binder is cement, plaster or burnt lime.

9. Mortar composition according to claim 1, **characterised in that** the hydrophobic ad- or ab-sorbent is hydrophobised silicic acid, activated carbon or a hydrophobic zeolite.

10. Mortar composition according to claim 1, **characterised in that** the aqueous component comprises hollow glass spheres in an amount of from 2 to 8 % by weight of the amount of the thickened water.

11. Mortar composition according to claim 1, **characterised in that** the aqueous component comprises zinc stearate in an amount of from 0.5 to 1.5 % by weight, based on the amount of thickened water by weight.

12. Mortar composition according to claim 1, **characterised in that** the aqueous component comprises, as additive, hydrophobised silica sand having rounded edges.

## Revendications

1. Masse de mortier durcissable, contenant :
- un composant liant qui présente :
- un liant hydraulique, et
- comme agent d'empâtage, un solvant non polaire inerte avec un polymère thermoplastique finement dispersé, et
- un composant aqueux maintenu séparé de celui-ci, qui présente :
- de l'eau, et
- un agent d'ad- ou absorption hydrophobe.

2. Masse de mortier selon la revendication 1, **caractérisée en ce que** le solvant non polaire est une huile de paraffine et que le polymère thermoplastique est une polyoléfine ou un mélange de polyoléfines avec d'autres thermoplastiques.

3. Masse de mortier selon la revendication 2, **caractérisée en ce que** la quantité d'huile se situe dans l'intervalle allant de 8 à 22% en poids du liant hydraulique et la quantité de polymère thermoplastique de 1 à 30% en poids de la quantité d'huile.

4. Masse de mortier selon la revendication 1, **caractérisée en ce que** le composant liant présente un détergent comme additif.

5. Masse de mortier selon la revendication 4, **caractérisée en ce que** la quantité de détergent se situe dans l'intervalle allant de 2,5 à 14% en poids de la quantité d'huile.

6. Masse de mortier selon la revendication 1, **caractérisée en ce que** le composant aqueux est réglé, à l'aide d'un agent thixotrope de telle sorte qu'il se comporte de manière pâteuse sans action de forces de cisaillement.

7. Masse de mortier selon la revendication 6, **caractérisée en ce que** l'agent thixotrope est un polyacryle, un poly(alcool vinylique), une cellulose modifiée ou de l'acide silicique.

8. Masse de mortier selon la revendication 1, **caractérisée en ce que** le liant hydraulique est du ciment, du plâtre ou de la chaux vive.

9. Masse de mortier selon la revendication 1, **caractérisée en ce que** l'agent d'ad- ou absorption est un acide silicique rendu hydrophobe, du charbon actif ou une zéolite hydrophobe.

10. Masse de mortier selon la revendication 1, **caractérisée en ce que** le composant aqueux présente des billes en verre creuses en une quantité de 2 à 8% en poids de la quantité d'eau épaissie.

11. Masse de mortier selon la revendication 1, **caractérisée en ce que** le composant aqueux présente du stéarate de zinc en une quantité de 0,5 à 1,5% en poids, sur base de la quantité en poids de l'eau épaissie.

12. Masse de mortier selon la revendication 1, **caractérisée en ce que** le composant aqueux présente comme agrégat, du sable de quartz arrondi et rendu hydrophobe.
